# EUROPÄISCHE PATENTSCHRIFT

(11) **EP 1 678 268 B1**
(45) Veröffentlichungstag und Bekanntmachung des Hinweises auf die Patenterteilung: **16.09.2009**
(21) Anmeldenummer: 04789908.3
(22) Anmeldetag: 01.10.2004
(51) Int. Cl.: C09D 185/04, C08K 3/00

(54) **ZUSAMMENSETZUNG FÜR EIN BRANDSCHUTZMITTEL FÜR WERKSTOFFE UND VERFAHREN ZUM BRANDSCHUTZ**
COMPOSITION FOR A FIRE-PROTECTION AGENT FOR MATERIALS AND FIRE-PROTECTION METHOD
COMPOSANT D'AGENT D'IGNIFUGATION DE MATERIAUX ET PROCEDE D'IGNIFUGATION

(30) Priorität: 02.10.2003 DE 10345935; 07.05.2004 DE 102004023166
(43) Veröffentlichungstag der Anmeldung: 12.07.2006
(73) Patentinhaber: Fraunhofer-Gesellschaft zur Förderung der angewandten Forschung e.V., 80686 München (DE)
(72) Erfinder: KRUSE, Dirk, 38100 Braunschweig (DE); SIMON, Sebastian, 38114 Braunschweig (DE); MENKE, Klaus, 76646 Bruchsal (DE); FRIEBEL, Stefan, 38173 Evessen (DE); GETTWERT, Volker, 67141 Neuhofen (DE)
(74) Vertreter: Kröncke, Rolf
(86) Internationale Anmeldenummer: PCT/DE2004/002191
(87) Internationale Veröffentlichungsnummer: WO 2005/033232

(56) Entgegenhaltungen:
- EP-A- 0 878 520
- US-B1- 6 251 961
- US-B1- 6 620 349

## Beschreibung

Die vorliegende Erfindung betrifft neue Zusammensetzungen für Brandschutzmittel für Werkstoffe, Verfahren zur Behandlung von Werkstoffen für den Brandschutz sowie die Verwendung von Zusammensetzungen als Brandschutzmittel. Genauer betrifft die vorliegende Erfindung Zusammensetzungen für ein Brandschutzmittel, wie ein Brandschutzanstrich, für Werkstoffe, dadurch gekennzeichnet, dass als Inhaltsstoffe keramisierende Additive und Volumenbildner enthalten sind.

### Stand der Technik

Der Schutz von Werkstoffen und Bauteilen im Brandfall vor Temperatureinwirkung ist ein übliches Verfahren im Rahmen des baulichen Brandschutzes.

Grundsätzlich stehen dazu drei bekannte Möglichkeiten zur Verfügung. Werkstoff und Bauteile können durch nicht brennbare Werkstoffe, wie Gipsfaser- oder Gipskartonplatten beplankt oder eingehaust werden, um im Brandfall den Temperaturzutritt zum Bauteil zu verzögern. Dieser Lösungsweg wird in der Regel im Stahl- und Holzbau angewendet. Die zweite Möglichkeit ist das Aufbringen von Schutzanstrichen, die sich im Brandfall ausdehnen und einen physikalischen Temperaturschutz bewirken.

Die US 4,965,296 beschreibt ein flammhemmendes Material, das sich aus einem flammhemmenden Beschichtungsmaterial und einem elektrisch leitfähigen Material zusammensetzt. Das flammhemmende Beschichtungsmaterial besteht dabei aus schaum- und kohlenstoffbildenden Substanzen, einer gaserzeugenden Verbindung, einem filmbildenden Bindemittel und entsprechenden Lösungsmitteln. Fakultativ können übliche weitere Inhaltsstoffe anwesend sein. In der US 4,879,320 wird eine ähnliche, flammhemmende Zusammensetzung beschrieben, der jedoch anstelle eines leitfähigen Materials ein keramisches Fasermaterial zugesetzt ist. Die US 5,225,464 beschreibt eine wässrige Intumeszenz-Formulierung auf Basis eines Reaktionsproduktes aus Phosphorsäure, Melamin und Monoammoniumphosphat, die mit Pentaerythritol, chlorierten Kohlenwasserstoffen und weiteren Verbindungen, insbesondere Polyvinylacetat, ein verbessertes Intumeszenzbeschichtungsmaterial liefern soll. Die DE 42 18 184 A1 beschreibt ein wässriges Bindemittelgemisch, bestehend aus einer wässrigen Lösung und/oder Dispersion einer Kombination aus a) mindestens einem in Gegenwart der Komponente b) in Wasser löslichen und/oder dispergierbaren Urethangruppen aufweisenden NCO-Vorpolymer mit blockierten Isocyanatgruppen und b) einer Polyamin-Komponente, bestehend aus mindestens einem (cyclo)aliphatischen Polyamin mit mindestens zwei primären und/oder sekundären Aminogruppen. Die DE 43 43 668 beschreibt aufblähbare, flammhemmende Überzugsmassen, bestehend mindestens aus:
4 bis 25 Gew.-% eines filmbildenden Bindemittels
10 bis 40 Gew.-% Ammoniumpolyphosphat
8 bis 40 Gew.-% mindestens einer bei Hitzeeinwirkung carbonisierenden Substanz
6 bis 25 Gew.-% eines Treibmittels
0 bis 51 Gew.-% Dispergiermittel und
0 bis 25 Gew.-% Füllstoffe.

In der DE 199 09 387 A1 wird eine dämmschichtbildende Brandschutzbeschichtung auf Basis von im Brandfall schaumschichtbildenden und kohlenstoffenbildenden Substanzen, filmbildenden Bindemitteln, Treibmitteln und üblichen Hilfs- und Zusatzstoffen, beschrieben, dadurch gekennzeichnet, dass sie als Treibmittel Melaminpolyphosphat enthält. Die in dieser Schrift beschriebene dämmschichtbildende Brandschutzbeschichtung ist insbesondere unter tropischen Bedingungen (bis 100 % relative Luftfeuchte, ca. 75 °C) stabil, d.h. sie setzt nur extrem wenig NH₃ frei.

Den genannten Stand der Technik gemeinsam ist, dass sie die Entzündung brennbarer Substrate nicht verhindern können. Vorrangig werden sie daher verwendet, um die Feuerwiderstandsdauer, also den Zeitraum zwischen Brandbeginn und strukturellem Versagen von Bauteilen, zu erhöhen. Hier haben sie eine gewisse Bedeutung bei der Beschichtung von Stahl erlangt, der ungeschützt nur eine geringer Feuerwiderstandsdauer besitzt. Die Bedeutung bei der Beschichtung von Holz ist vergleichsweise geringer. Eine Einstufung derartig beschichteter Hölzer in die Baustoffeklasse B1 nach DIN 4102 ist erzielbar. Die beschriebenen Beschichtungen bilden einen leichten Kohlenstoffschaum aus, der äußeren Kräften kaum Widerstand entgegensetzen kann.

Ein weiterer entscheidender Nachteil der verfügbaren Kohlenstoffschaumbildner sind die einschränkenden Gebrauchseigenschaften deartiger Anstriche. So sind herkömmliche Brandschutzanstriche ausschließlich für die Verwendung im Trockenen zugelassen. Sie verfügen über keine ausreichende Dauerhaftigkeit unter klimatischer Belastung, werden durch Feuchtigkeit angelöst und sind zu weich, um auf Fußböden oder vergleichbaren Bauteilen verwendet werden zu können.

Die dritte Möglichkeit ist die Zugabe von Flammschutzmitteln, die vorwiegend zur Brandschutzausrüstung von Kunststoffen und teilweise für Holz- und Papierwerkstoffe eingesetzt werden. Flammschutzmittel sind chemische Substanzen, die entweder die Entflammbarkeit und/oder die Brennbarkeit vermindern oder die Feuerwiderstandsdauer des Werkstoffs oder des Bauteils erhöhen. Dies ist durch folgende chemische und/oder physikalische Prozesse zu erreichen:
- Reduzierung der Wärmezufuhr durch das Hinzufügen von Stoffen, die sich in einem stark endothermen Prozess zersetzen und dabei nicht brennbare Gase erzeugen, die zusätzlich die Flammen eindämmen (z.B. Aluminium-, Magnesiumhydroxid). Energieverbrauchende Brandschutzmittel;
- Ersticken der Flammen durch Entwicklung chemischer Substanzen, die die H- und OH-Radikale binden. Feuererstickende Brandschutzmittel;
- Begrenzung des Wärmeflusses durch Schaffung eines isolierenden Schicht an der Oberfläche. Verkohlungsfördernde, sperrschicht- und dämmschichtbildende Brandschutzmittel. Im Allgemeinen werden heutige Brandschutzmittel nach mehreren dieser Prinzipien funktionieren.

Schließlich beschreibt die EP 878 520 eine Zusammensetzung für hochtemperaturfeste pyrolitisch keramisierende Beschichtungen. Diese dort beschriebenen Zusammensetzungen führen zu keramisierenden Beschichtungen, die sich auf dem Werkstoff ausbilden. Allerdings sind die dabei ausgebildeten Schichten nicht ausreichend, um den Anforderungen in Bezug auf die Brandschutzanforderungen, z.B. im Holzbereich zu erfüllen.

Aufgabe der vorliegende Erfindung war es daher, eine Zusammensetzung bereitzustellen, die die oben genannten Nachteile überwindet und insbesondere den Zeitraum der Schutzwirkung verlängert, dabei aber auch den anderen Anforderungen, die sich bei den jeweiligen Anwendungsgebieten ergeben, genügen. z.B. sind dies bei der Verwendung auf dem Werkstoff Holz in der Innenanwendung im Wesentlichen: Transparenz, Kratz- und Abriebfestigkeit, Feuchtebeständigkeit, Lichtechtheit, Umweltverträglichkeit und andere. In der Außenanwendung sind hingegen folgende Eigenschaften erforderlich: Außenbewitterungsstabilität, geringe Verschmutzung, Feuchteschutzwirkung, UV-Schutz, Dehnbarkeit.

### Beschreibung der Erfindung

Die vorliegende Erfindung ist somit gerichtet auf eine Zusammensetzung für ein Brandschutzmittel für Werkstoffe, dadurch gekennzeichnet, dass als Inhaltsstoffe keramisierende Additive und Volumenbildner enthalten sind.

In einer bevorzugten Ausführungsform liegen die keramisierenden Additive dabei in Pulverform vor.

Bevorzugt enthalten die keramisierenden Additive mindestens zwei der Verbindungen von Dinatriumtetraborat, z. B. Borax, Ammoniumpentaborat, TiO₂, B₂O₃ und SiO₂. Weitere erfindungsgemäß verwendbare keramisierende Additive (im Folgenden auch als Glas- oder Keramikbildner bezeichnet) umfassen KAlSO₄, Ammoniumpentaborat, Na₂CO₃, CaO, SiC. Insbesondere bevorzugt ist eine Kombination von Ammoniumpentaborat und Dinatriumtetraborat.

Weiterhin enthält die erfindungsgemäße Zusammensetzung für ein Brandschutzmittel für Werkstoffe einen Volumenbildner. In der vorliegenden Anmeldung werden unter Volumenbildner Mittel verstanden, die als Treibmittel wirken und bei Erwärmung das Volumen der durch das Brandschutzmittel gebildeten Schicht erhöht. Bevorzugt erfolgt dabei eine Volumenvergrößerung um mindestens 500 %, bevorzugter um mindestens 1000 %, wie um mindestens 4000 % und mehr, wenn das Brandschutzmittel einer Erwärmung ausgesetzt wird. Die Erwärmung muss dabei z.B. mindestens 100 °C betragen. Volumenbildner schließen Gasbildner, die gegebenenfalls in Kombination mit Säurebildner verwendet werden, ein. Gasbildner sind allgemein in der Literatur bekannt, beispielhaft werden hier genannt: NH₄Cl, NaHCO₃, Melaminphosphat, Melamin, Melamin gecoatetes Ammoniumpolyphosphat. Als Beispiele für Säurebildner seien genannt: Melaminphosphat, Aluminiumsulfat, Ammoniumsulfat, Ammoniumpolysulfat, Ammoniummonophosphat und Exolit 422^{®} (Handelsname der Firma Clariant, Deutschland).

Es können ebenfalls Hilfsstoffe in der erfindungsgemäßen Zusammensetzung enthalten sein, als Hilfsstoffe seien hier beispielhaft genannt: KAlSO₄, Al(OH)₃, Aluminiumsulfat, Pentaerythrit, Dipentaerythrit.

Die erfindungsgemäße Zusammensetzung erlaubt das Ausbilden einer keramischen Schicht mit großer Schichtdichte bei Erwärmung. Die durch die erfindungsgemäße Zusammensetzung erreichte Vergrößerung der keramischen Schichtdicke erlaubt beschichtbare Werkstoffe und Bauteile über einen längeren Zeitraum vor unerwünschter Erwärmung zu schützen.

D.h., die dämmschichtbildende keramisierende Zusammensetzung verändert sich aufgrund von Veränderungen der Umgebungsbedingungen. Im vorliegenden Fall wird durch Erhöhung der Temperatur und bei Überschreiten einer Grenztemperatur eine Volumenvergrößerung hervorgerufen z.B. eine voluminöse Kohlenstoffschicht ausgebildet. Der Temperaturbereich, bei dem ein Schutz beginnt, kann z.B. durch Kombination der einzelnen Komponenten in einem Bereich von 110 °C bis 220 °C reguliert werden. Dies erlaubt die Ausbildung einer keramischen Schicht mit hoher Festigkeit und hohe Wärmeisolationsvermögen mit hoher Schichtdicke. So wird der Werkstoff über einen längeren Zeitraum vor unerwünschter Erwärmung geschützt.

Das Ausbilden des gewünschten Volumens der Dämmschicht bzw. Brandschutzschicht kann durch Kohlenstoffschaumbildung oder durch Verwendung von anderen Treibmitteln erzielt werden.

Die Erfindung richtet sich somit einerseits auf Zusammensetzungen für Brandschutzmittel für Werkstoffe, die aus herkömmlichen intumeszierenden Kohlenstoffschaumbildnern bestehen. Dabei können Keramikpulver, also keramisierende Additive, zu dem herkömmlichen intumeszierenden Kohlenstoffschaumbildner zugesetzt werden, um ein erfindungsgemäße Zusammensetzung zu erhalten.

Andererseits richtet sich die vorliegende Erfindung auch auf Zusammensetzungen, die andere volumenausbildende Mittel enthalten, wie Aluminiumhydroxid. Hierbei wird eine voluminöse keramisierte Schicht erhalten. Erfindungsgemäß können also keramisierende Additive als Zusatz zu bisherigen Dämmschutzmitteln/Kohlenstoffschaumbildnern verwendet werden. Alternativ erlaubt die erfindungsgemäße Zusammensetzung das Ausbilden einer Dämmschutzschicht durch Verwendung von anderen Treibmitteln.

Eine erfindungsgemäße Zusammensetzung ist z.B. (im Folgenden beziehen sich alle %-Angaben auf Gewichtsprozent, solange nicht anders angegeben).
3 bis 30 Gew.-% eines filmbildenden Bindemittels auf Basis eines Polybutadienharzes
0 bis 2 Gew.-% eines Vernetzers
20 bis 55 Gew.-% eines bei Hitzeinwirkung glasierenden/keramisierenden Zusatzes
4 bis 25 Gew.-% eines Treibmittels
0 bis 51 Gew.-% Dispergiermittel
0 bis 25 Gew.-% Füllstoffe
0 bis 25 Gew.-% Pigmente
0 bis 25 Gew.-% Entschäumer
0 bis 25 Gew.-% anorganische Salze
0 bis 25 Gew.-% Verlaufsadditive.

Eine weitere erfindungsgemäße Zusammensetzung besteht aus:
30 bis 70 Gew.-% einer lösemittelfreien Silicon-Mikoremulsion auf Silan/Siloxan-Basis, bevorzugt 40 bis 62 %, besonders bevorzugt 50 bis 56 %
3 bis 30 Gew.-% eines filmbildenden Bindemittels auf Basis eines Polybutadienharzes, bevorzugt 4 bis 20 %, besonders bevorzugt 6 bis 10 %
0 bis 2 Gew.-% eines Vernetzers auf Basis eines Dicyanates
20 bis 55 Gew.-% eines bei Hitzeinwirkung glasierenden/keramisierenden Zusatzes, bevorzugt 30 bis 44 %, besonders bevorzugt 35 bis 38 %
4 bis 25 Gew.-% eines Treibmittels
0 bis 51 Gew.-% Dispergiermittel
0 bis 25 Gew.-% Füllstoffe
0 bis 25 Gew.-% Pigmente
0 bis 25 Gew.-% Entschäumer
0 bis 25 Gew.-% Verlaufsadditive
0 bis 25 Gew.-% (anorganische) Salze.

Eine weitere erfindungsgemäße Ausführungsform umfasst:
30 bis 40 Gew.-% einer Mischung verschiedener Harze auf Basis von Formaldehyd-Harnstoffharzen
6 bis 13 Gew.-% eines bei Hitzeeinwirkung glasierenden/keramisierenden Zusatzes
10 bis 18 Gew.-% eines Ammoniumpolyphosphates
5 bis 10 Gew.-% eines Treibmittels
30 bis 40 Gew.-% eines partiellen Phosphorsäureesters
0 bis 25 Gew.-% Pigmente
0 bis 25 Gew.-% Entschäumer
0 bis 25 Gew.-% Verlaufsadditive
0 bis 10 Gew.-% weiterer, üblicher Additive.

Der bei Hitzeeinwirkung glasierende/keramisierende Zusatz ist dabei einer, der 12 bis 88 % Dinatriumtetraborat, 12 bis 88 % B₂O₃ und/oder 12 bis 88 % SiO₂ umfasst.

Der Zusatz kann weiterhin weitere Glas- bzw. Keramikbildner enthalten, wie Na₂CO₃, KAlSO₄, Ammoniumpentaborat, CaO, SiC.

Wenn keramisierende Additive zu herkömmlichen intumeszierenden Kohlenstoffschaumbildnern als Zusatz zugefügt wird, ist die Zusammensetzung dieses Zusatzes in einer bevorzugten Ausführungsform:
25 bis 40 % Ammoniumpolyphosphat
20 bis 26 % Melamin
5 bis 15 % SiO₂ und
5 bis 35 % Dinatriumtetraborat.

In einer anderen Ausführungsform ist der Zusatz:
12 bis 88 Gew.-% Dinatriumtetraborat und
12 bis 88 Gew.-% B₂O₃

Ein bevorzugter Zusatz ist dabei:
25 bis 40 % Ammoniumpolyphosphat
20 bis 26 % Melamin
5 bis 15 % SiO2
5 bis 35 % Dinatriumtetraborat
0 bis 5 % CaO
0 bis 25 % Pentaerythritol
5 bis 25 % B₂O₃ und
0 bis 10 % SiO₂.

Eine andere bevorzugte Ausführungsform ist:
12 bis 55 % Dinatriumtetraborat
12 bis 55 % B₂O₃
0 bis 30 % Melamin
0 bis 50 % Ammoniumpolyphosphat
0 bis 15 % SiO₂
0 bis 15 % CaO

Eine besonders bevorzugte Ausführungsform ist:
10,0 % Dinatriumtetraborat
10,0 % B₂O₃
5,3 % SiO₂
2,7 % CaO
2,7 % SIC
30,0 % Exolit 422
20,0 % Melamin
19,3 % Pentraerythritol.

In den oben genannten bevorzugten Ausführungsformen kann, wenn vorhanden, Pentaerythritol durch Dipentaerythritol ersetzt sein. Gleiches gilt für Ammoniumpolyphosphat, dieses kann durch Ammoniummonophosphat ersetzt sein.

Eine weitere bevorzugte Ausführungsform umfasst Anstriche auf Formaldehyd-Melaminharz-Basis, wie z.B. eine folgende bevorzugte Ausführungsform:
20-30 Gew.-% Formaldehyd-Melaminharz
30-50 Gew-% partieller Phosphorsäureester
0-1 Gew.-% Entschäumer
0-20 Gew.-% Borate
0-20 Gew.-% Silikate
0-20 Gew.-% Silikonkautschuk
0-2 Gew.-% SiC
0-10 Gew.-% SiO₂
0-5 Gew.-% weitere Additive

Eine weitere Möglichkeit ist eine Beschichtung auf Silikonkautschukbasis, wie eine Zusammensetzung, die unter anderem folgende Bestandteile enthält:
40-80 Gew.-% Silikonkautschuk
0-40 Gew.-% Phosphorsäureester
0-40 Gew.-% Borate

Als Beschichtungen für den Außenbereich sind Beschichtungen auf MDI-Basis vorstellbar, wie Beschichtungen mit folgender Zusammensetzung:
20-40 Gew.-% Präpolymer auf MDI-Basis
10-20 Gew.-% Wasserglas
10-40 Gew.-% Borate
0-15 Gew.-% Phenolharz
0-1 Gew.-% SiC
0-10 Gew.-% SiO₂
0-0,5 Gew.-% TiO2
0-20 Gew.-% Cokatalysatoren, Verdünner, Weichmacher
Obige Zusammensetzung kann als Zusatz zu herkömmlichen Beschichtungszusammensetzungen für den Außenbereich zugegeben werden.

Schließlich können die keramisierenden Additive und Volumenbildner auch zu herkömmlichen strahlungshärtbaren Lacksystemen zugegeben werden. Beispielhaft sei hier ein strahlungshärtbares Lacksystem, das mit UV-Strahlung ausgehärtet werden kann, genannt:
20 bis 65 Gew.-% Ebecryl 284
10 bis 30 Gew.-% Ebecryl 1039
5 bis 30 Gew.-% Ebecryl 8804
4 bis 20 Gew.-% Ebecryl 1259
0,1 bis 0,5 Gew.-% Tego Wet KL 245
1 bis 6 Gew.-% Photoinitiator
0 bis 10 Gew.-% weiterer, üblicher Additive

Zu der oben genannten strahlungshärtbaren Lackzusammensetzung können die vorgenannten Zusätze zum Beispiel mit einem Anteil von 30 bis 55 Gew.-%, bezogen auf den Anteil des UV-Lacks zugefügt werden.

Als Dispergiermittel, Pigment, Entschäumer, Verlaufsadditive wurden solche verwendet, wie sie üblicherweise für Anstriche, Lacke und Brandschutzmittel verwendet werden.

Bevorzugt werden die Bestandteile des keramisierenden Additivs vor Dispersion in den weiteren Bestandteilen des Brandschutzmittels fein vermahlen, z.B. werden die Bestandteile vor Dispersion 0 bis 3 Tage in einer Kugelmühle unter Feuchtigkeitsausschluss gemahlen. Anschließend erfolgt ein Eindispergieren der Pulvermischung in die weiteren Bestandteile des Brandschutzmittels. Die bevorzugte Ausführungsform des Brandschutzmittels enthält somit keramisierende Additive in Pulverform.

In einer bevorzugten Ausführungsform liegen dabei die einzelnen Bestandteile und insbesondere die Bestandteile der Säure- und/oder Gasbildner in nanoverkapselter Form vor, z.B. können die einzelnen Bestandteile dabei als Salze mit Korngrößen von 1 bis 50 µm, die mit Nanopartikeln beschichtet sind, vorliegen. Die Beschichtung oder Einhüllung erfolgt dabei mit z.B. Carnaubawachs oder SiO₂ gemäß bekannten Verfahren. Das Verfahren schließt zum Beispiel ein physikalisches Verfahren ein. Bevorzugt liegen dabei die Gas- und/oder Säurebildner in mit Nanopartikeln umhüllter oder eingekapselter Form vor. Insbesondere kann Ammoniumchlorid mit Carnaubawachs, Ammoniumchlorid mit SiO₂, Dibortrioxid mit Carnaubawachs, Dibortrioxid mit SiO₂, Natriumhydrogencarbonat mit Carnaubawachs, Natriumhydrogencarbonat mit SiO₂, Ammoniumsulfat mit Carnaubawachs, Ammoniumsulfat mit SiO₂, Kaliumaluminiumsulfat x 18H₂O mit Carnaubawachs, Kaliumaluminiumsulfat x 18H₂O mit SiO₂, Calciumoxid mit Carnaubawachs, Calciumoxid mit SiO₂ beschichtet sein. Dies erlaubt u.a., dass die beschichteten Stoffe gegenüber Wasser und pH unempfindlicher sind. Dadurch können z.B. keine Vorreaktionen bei Lagerung der Zusammensetzung auftreten.

Ein weiterer wesentlicher Vorteil der Verkapselung oder Einhüllung von insbesondere den Gas- und/oder Säurebildnern ist es, dass diese Stoffe mit weiteren Komponenten in einer Zusammensetzung kombiniert werden können, deren Kombination aus Unverträglichkeitsgründen sonst nicht möglich wäre. Beispielhaft sei hier die Verwendung von säureempfindlichen Komponenten in sauren Harzen genannt.

Außerdem erlaubt die Verkapselung oder Einhüllung der Bestandteile der erfindungsgemäßen Zusammensetzungen, dass bestimmte Bestandteile der Zusammensetzungen zu genau bestimmten Zeitpunkten miteinander reagieren können. Im vorliegenden Fall erlaubt z.B. die Verwendung der Verkapselung oder Einhüllung der Gas- und/oder Säurebildner die Regulation der Umsetzung dieser Verbindungen. Bei Brandschutzmitteln ist insbesondere eine Temperatursteuerung gefordert. Eine Verkapselung mit z.B. Carnaubawachs, das ab etwa 72 °C anfängt zu schmelzen, ermöglicht es, dass die Gas- und/oder Säurebildner erst ab ca. 100 °C reagieren und somit die Ausbildung der voluminösen Schutzschicht beginnen kann. Bevorzugt liegt der regulierbare Temperaturbereich, in dem ein Schutz aufgebaut wird, im Bereich von 110 °C bis 220 °C. Dieses oben dargestellte System erlaubt somit die Entwicklung von intelligenten Beschichtungssystemen und Stoffkombinationen in Zusammensetzungen, die aufgrund von Unverträglichkeiten der einzelnen Komponenten sonst nicht möglich wären.

In einer weiteren erfindungsgemäßen Ausführungsform liegen die festen Bestandteile in der Zusammensetzung als Nanopartikel mit einer durchschnittlichen Korngröße von 1 bis 150 nm, bevorzugt 4 bis 120 nm vor. Die Verwendung dieser Nanopartikel erlaubt die Herstellung transparenter Dispersions-Beschichtungen, wie transparente Lacke.

Die erfindungsgemäßen Brandschutzmittel zeichnen sich z.B. dadurch aus, dass die Oberflächentemperatur des Substrats nach einem Zeitraum von 180 Minuten Brandbelastung nach Einheitstemperatur unter 300 °C liegt. Weiterhin ist die Anstrichschicht nach prEN 927-6 klimatisch beständig. Die Dehnbarkeit des Anstrichs weist z.B. dabei einen Wert von 60 % oder größer auf.

Die keramischen Additive und/oder Volumenbildner können auch in andere Werkstoffe eingearbeitet werden. Diese weiteren Werkstoffe schließen Polymere, Kabelummantelungen usw. ein. Die Einarbeitung in andere Werkstoffe, wie z.B. Holzwerkstoffe, extrudierte Werkstoffe, Wood-Plastic-Composite, CFK und Beton ist ebenfalls möglich. Das Einarbeiten von keramischen Additiven und/oder Volumenbildnern in z.B. Kabelummantelungen erlaubt die Bereitstellung von erhöhten Dämmschutzschichten bei Kabeln, bei denen ein solcher Brandschutz bisher nicht möglich ist.

Die vorliegende Erfindung beruht dabei auf die Erkenntnis, dass die Ausbildung von voluminösen keramischen Schichten, die gegebenenfalls ein Hybridsystem aus Kohlenstoffschaum und keramischer Schicht darstellen, einen verbesserten Schutz von Werkstoffen vor unerwünschter Erwärmung erlaubt.

Ab einer definierten erhöhten Temperatur von z.B. 100 °C, z.B. ein durch Variation der einzelnen Komponenten einstellbaren Bereich von 110 °C bis 220 °C, erweicht das Bindemittel und Gase werden abgespalten. Aufgrund der Gasbildungsreaktion wird das erweichte Bindemittel aufgeschäumt und ab einer weiter erhöhten Temperatur von z.B. 200 °C bildet sich zunächst eine glasartige Keramik, die mit weiter steigenden Temperatur zu einer echten Keramik ausgebildet wird. Bei einem System mit Kohlenstoffschicht bildet sich bei thermischer Belastung zunächst eine Kohlenstoffschicht aus, die bei weiter erhöhten Temperaturen von z.B. 350 °C eine glasartige Keramik ausbilden, diese glasartige Keramik erhöht die physische Belastbarkeit des Kohlenstoffschaums wesentlich. Der Reaktionsablauf lässt sich also wie folgt beschreiben. Mit steigender Temperatur wird zunächst eine Säure freigesetzt. Die Säure reagiert mit dem Kohlenstoffbildner. Parallel dazu setzt die Gasbildungsreaktion ein, die zu einer Volumenvergrößerung führt. Dabei werden auch die keramischen Additive über die gesamte volumenvergrößerte Schicht verteilt. Bei weiter erhöhter Temperatur bildet sich zuerst eine glasartige Keramik, die sich bei noch höheren Temperaturen zu einer echten Keramik ausbildet. Ein wichtiger Punkt ist dabei, dass die Reaktionen mit dem Erweichen der Bindemittelmatrix zusammenfallen. Der ausgebildete Schutz kann sich dadurch auszeichnen, dass über den gesamten Bereich die keramisierenden Additive eine echte Keramik ausbilden.

Mit der erfindungsgemäßen Verwendung des Brandschutzanstriches sind schlankere Konstruktionen möglich. Beispielsweise wird für eine unbeschichtete, tragende Stütze aus Fichtenholz eine Abmessung von 14/14 benötigt, sofern der Brandschutz eine F30 Ausführung nötig macht und aufgrund der Statik eine Abmessung von 12/12 erforderlich ist. Wird hingegen die Stütze mit dem Brandschutzanstrich versehen, ist eine Dimensionierung von 12/12 möglich.

Besonders vorteilhaft ist der hier beschriebene Brandschutzanstrich bei der Erfüllung von Brandschutzanforderungen im Baubestand. Zum Beispiel haben viele mehrgeschossige Gebäude, die Anfang des 20. Jhd. erstellt wurden, eine Holztreppe. Üblicherweise sind die Wohnungseingangstüren ebenfalls in Holz ausgeführt. Derartige Konstruktionen erfüllen keineswegs die modernen Brandschutzanforderungen; allerdings besteht Bestandschutz. Sobald der Bestandschutz aufgehoben wird, z.B. aufgrund größerer Renovierungen oder Umbauten, sind massive Umbauten des Treppenhauses erforderlich. Dabei sind bisher zwei Lösungen möglich. Entweder die Holztreppe wird komplett ausgetauscht oder im Rahmen eines Brandschutzkonzeptes wird als Kompensationsmaßnahme der Einbau einer Vollsprinkelung des Treppenhauses vorgenommen. Bei der zweiten Lösung wird in der Regel eine rückseitige Beplankung der Treppenkonstruktion mit Brandschutzplatten erforderlich sein. Beide Lösungen stellen einen massiven Eingriff in die Bausubstanz dar, die den Charakter eines Gebäudes verändern. Hinzu kommt, dass beide Lösungen mit erheblichen Kosten verbunden sind. Mit der erfindungsgemäßen Verwendung der Brandschutzbeschichtung lässt sich ein Holztreppenhaus ohne massiven Eingriff in die Bausubstanz und unter Wahrung des baulichen Charakters brandschutztechnisch ertüchtigen. Diese Lösung ist, im Vergleich zu den bisher verfügbaren, deutlich kostengünstiger und schneller umzusetzen. Ähnliches gilt für Dachstühle aus Holz oder für andere hölzerne Konstruktionen in bestehenden Gebäuden.

Der geringe Eingriff in die Bausubstanz prädestiniert die beschriebene Erfindung geradezu, den Brandschutz bei historischen Bauwerken und Kulturgütern zukünftig sicherzustellen. Insbesondere im Denkmalschutz besteht nämlich ein sehr starkes Spannungsfeld zwischen den Erfordernissen des Brandschutzes und den Ansprüchen des Denkmalschutzes. Die Verwendung von Brandmelde- und Sprinkleranlagen steht nicht nur unter dem Aspekt des baulichen Eingriffs unter Kritik. Der Einbau einer Sprinkleranlage birgt grundsätzlich die Gefahr eines Wasserschadens, der unter Umständen mehr Kulturgüter vernichten kann als ein Schadensfeuer.

Mit der Verabschiedung der neuen Musterbauordnung wird es künftig möglich sein, mehrgeschossige Holzgebäude mit bis zu fünf Vollgeschossen zu errichten. Die dort geforderte brandschutztechnisch wirksame Beschichtung, welche die Konstruktion über 60 Minuten vor der Entzündung schützen soll, lässt sich nach dem Stand der Technik nur durch eine Beplankung mit Gipskarton und Gipsfaserplatten herstellen. Diese Lösung erfordert einen hohen Erstellungsaufwand und ist problematisch, sofern im Gebäude mit Setzungen zu rechnen ist. Hinzu kommt, dass die Beplankung die Ästhetik des Werkstoffes Holz und der Holzkonstruktion verbirgt. Die erfindungsgemäße Verwendung des Anstriches erlaubt hingegen eine einfachere Konstruktion und hat keine Probleme mit Bauwerksetzungen. Eine transparente Ausführung des Anstriches schränkt die Ästhetik der Holzkonstruktion kaum ein.

### Ausführungsbeispiel 1

Aus Industriespanplatten der Qualität V100 mit einer Dichte von 400 kg/m² und einer Dicke von 1 cm wurden Probekörper mit den Abmessungen 90 x 230 cm hergestellt.

Zur Charakterisierung der Brandeigenschaften wurde ein modifizierter Test nach DIN 4102 für Werkstoffe der Brandschutzklasse B 2 angewendet. Im Unterschied zu der festgelegten Beflammungszeit von 15 s wurde die Beflammung 10 Minuten durchgeführt. Nach 10 Minuten wurde die Pyrolysetiefe im Querschnitt mit Hilfe eines Mikroskops und der Masseverlust der Proben mit Hilfe einer Waage bestimmt. Die Pyrolyse war nach 10 Minuten im Bereich der Flammeneinwirkung über den gesamten Probenquerschnitt fortgeschritten. Der Masseverlust lag im Mittel bei 6 %.

### Ausführungsbeispiel 2

Eine wie im Beispiel 1 hergestellte Probe wurde mit dem Brandschutzanstrich versehen. Die Trockenschichtdicke des Anstrichs lag bei ca. 1 mm. Der Anstrich bestand aus
6,2 Gew.-% R45HT als Polybutadienharz
55,9 Gew.-% eines Silicon-Mikroemulsions-Konzentrat (Wacker SMK 2100)
13,7 Gew.-% Borax
9,9 Gew.-% B₂O₃
4,2 Gew.-% SiO₂
2,5 Gew.-% NH₄Cl
3,9 Gew.-% NaHCO₃
1,5 Gew.-% KAlSO₄
1,5 Gew.-% Ammoniumpentaborat
0,6 Gew.-% Isophorondiisocyanat
0,1 Gew.-% Dibutylzinnlaurat

Nach 10 Minuten Beflammung wurde die Pyrolysetiefe im Querschnitt und der Masseverlust der Proben, wie in Beispiel 1 beschrieben, bestimmt. Der Massenverlust lag unter 1 %, eine Pyrolyse des Holzanteils des Probekörpers ist nicht erfolgt.

### Ausführungsbeispiel 3

Aus Industriespanplatten der Qualität wie in Beispiel 1 wurden Probekörper mit den Abmessungen 100 x 200 cm für Brandschachtuntersuchungen nach DIN 4102-4 hergestellt. Gemäß der DIN wurden die Untersuchungen nach 2 Minuten abgebrochen, da das Grenzkriterium der Rauchgastemperatur überschritten wurde. Vergleichsweise wurde in einem weiteren Versuch das Abbruchkriterium ignoniert. Die Spanplattenproben brannten unter starker Rauch- und Hitzeentwicklung innerhalb von 7 Minuten vollständig ab. Im Rauchgas wurden Temperaturen von bis zu 800 ° C gemessen.

### Ausführungsbeispiel 4

Probekörper wie in Beispiel 3 wurden zusätzlich mit dem Brandschutzanstrich versehen. Die Trockenschichtdicke des Anstrichs wurde zu 1 mm bestimmt. Innerhalb der 10 Minuten Versuchsdauer kam es zu keinem Brand und zu keiner Flammenausbildung an der Oberfläche. Eine Untersuchung der Spanplatte nach dem Versuch zeigte, dass eine Pyrolyse der Spanplatte nicht stattgefunden hatte.

### Ausführungsbeispiel 5

Aus einem handelsüblichen Kabel des Typs NHXMH-J 3x2,5 wurden Probekörper mit einer Länge von 1 m hergestellt. Diese Probekörper wurden mit einer Variation des Brandschutzanstrichs beschichtet:
13,2 Gew.-% Beetle Resin BIP PT338
4,0 Gew.-% Beetle Resin BIP PT970
6,6 Gew.-% Madurit 320
2,0 Gew.-% Antiblaze VA490
20,0 Gew.-% Bakelite PF 7086DL
14,8 Gew.-% Ammoniumpolyphosphat (Exolite APP422)
13,9 Gew.-% Al(OH)₃
2,8 Gew.-% TiO₂
3,7 Gew.-% Melamin
4,6 Gew.-% Ammoniumpentaborat
27,8 Gew.-% Partieller Phosphorsäureester (Budit 380)
4,6 Gew.-% Destilliertes Wasser

Die Trockenschichtdicke des Anstrichs wurde auf 0,5 mm eingestellt. Die beschichteten Proben wurden nach DIN VDE 0250-215 (VDE 0250 Teil 215):2002-04 auf ihr Brandverhalten untersucht. Dabei wurde keine Flammenausbreitung an der Oberfläche festgestellt. Im Bereich der Flammeneinwirkung wurde unter dem Brandschutzanstrich keine Pyrolyse der Kabelisolation festgestellt.

## Patentansprüche

1. Zusammensetzung für ein Brandschutzmittel für Werkstoffe, **dadurch gekennzeichnet, dass** als Inhaltsstoffe keramisierende Additive und Volumenbildner enthalten sind.

2. Zusammensetzung gemäß Anspruch 1, **dadurch gekennzeichnet, dass** als keramisierende Additive mindestens zwei der Verbindungen Dinatriumtetraborat, Ammoniumpentaborat, TiO₂, B₂O₃ und SiO₂, insbesondere Dinatriumtetraborat und Ammoniumpentaborat enthalten sind.

3. Zusammensetzung gemäß Anspruch 1 oder Anspruch 2, **dadurch gekennzeichnet, dass** als Volumenbildner Gasbildner gegebenenfalls in Kombination mit Säurebildner enthalten sind.

4. Zusammensetzung gemäß Anspruch 3, wobei der Gasbildner ausgewählt ist aus der Gruppe bestehend aus NH₄Cl, NaHCO₃, Melaminphosphat und Melamin.

5. Zusammensetzung gemäß Anspruch 3 oder 4, wobei der Säurebildner ausgewählt ist aus der Gruppe bestehend aus Melaminphosphat, Aluminiumsulfat, Ammoniumpolyphosphat, Ammoniummonophosphat, Melamin gecoatetes Ammoniumpolyphosphat.

6. Zusammensetzung gemäß einem der vorherigen Ansprüche, die als weitere Hilfsstoffe KAlSO₄, Al(OH)₃, Aluminiumsulfat, Pentaerythrit, Dipentaerythrit oder Tripentaoerythrit enthält.

7. Zusammensetzung gemäß einem der vorherigen Ansprüche, wobei diese ein Anstrich auf Polybutadienharzbasis, Melamin/Formaldehyd-Basis und/oder strahlungshärtbare Lackbasis ist.

8. Zusammensetzung gemäß einem der vorherigen Ansprüche, weiterhin enthaltend Dispergiermittel, Füllstoffe, Pigmente, Entschäumer, anorganische Salze, Verlaufsadditive, Vernetzer und/oder Silikonmikroemulsion auf Silan/Siloxanbasis.

9. Zusammensetzung gemäß einem der vorherigen Ansprüche, wobei die Zusammensetzung als Zusatz zu Kohlenstoffschaumbildnern zugegeben wird.

10. Zusammensetzung gemäß einem der vorherigen Ansprüche, wobei die Zusammensetzung in flüssiger Form vorliegt.

11. Zusammensetzung gemäß einem der vorherigen Ansprüche, wobei zumindest die keramisierenden Additive und die Volumenbildner in mit Nanopartikeln beschichteter Form vorliegen.

12. Zusammensetzung gemäß einem der vorherigen Ansprüche, wobei Salze der keramisierenden Additive und der Volumenbildner eine Korngröße von 1 bis 50 µm aufzeigen.

13. Verfahren zur Behandlung von Werkstoffen für den Brandschutz, umfassend das Aufbringen einer Zusammensetzung gemäß einem der Ansprüche 1 bis 12.

14. Verfahren gemäß Anspruch 13, wobei es sich um Holz, Stahl, Beton oder Kunststoff handelt.

15. Verfahren zur Herstellung eines Brandschutzmittels, **dadurch gekennzeichnet, dass** keramisierende Additive und Volumenbildner zu einem volumenausbildbaren Brandschutzmittel zugegeben werden.

16. Verfahren gemäß Anspruch 15, **dadurch gekennzeichnet, dass** die keramisierenden Additive vor Eindispergieren in das Brandschutzmittel miteinander vermahlen werden.

17. Verfahren gemäß einem der Ansprüche 15 oder 16, **dadurch gekennzeichnet, dass** das Vermahlen in einer Kugelmühle unter Feuchtigkeitsausschluss für 0 bis 3 Tage erfolgt.

18. Verfahren gemäß einem der Ansprüche 15 bis 17, **dadurch gekennzeichnet, dass** die keramisierenden Additive und die Volumenbildner als mit Nanopartikeln beschichtete Salze vorliegen.

19. Verwendung einer Zusammensetzung gemäß einem der Ansprüche 1 bis 12 als Brandschutz für Holz, Stahl, Beton, Kunststoff.

20. Verwendung von keramisierenden Additiven und Volumenbildnern, wie in einem der vorherigen Ansprüche definiert als Stoffbeimischung in Polymeren, wie Kabelummantelungen,

21. Verwendung von keramisierenden Additiven und Volumenbildnern zur Herstellung transparenter Beschichtungen, wobei diese Additive und Volumenbildner mit Korngrößen von 1 bis 150 nm als Nanopartikel vorliegen.

## Claims

1. A composition for a fire protection agent for materials, **characterized in that** it's ingredients include ceramic-forming additives and volume-formers.

2. The composition of claim 1, **characterized in that** the ceramic-forming additives are at least two of the compounds disodiumtetraborate, ammoniumpentaborate, TiO₂, B₂O₃ and SiO₂, in particular, disodiumtetraborate and ammoniumpentaborate.

3. The composition of claim 1 or claim 2, **characterized in that** the volume-former comprises gas-formers alone or, optionally, in combination with acid-formers.

4. The composition of claim 3, wherein the gas-former is selected from the group consisting of NH₄Cl, NaHCO₃, melaminephosphate and melamine.

5. The composition of claim 3 or 4, wherein the acid-former is selected from the group consisting melaminephosphate, aluminiumsulphate, ammoniumpolyphosphate, ammoniummonophosphate, and melamine-coated ammoniumpolyphosphate.

6. The composition of any one of the preceeding claims, comprising as further auxiliaries KAlSO₄, Al(OH)₃, aluminiumsulphate, pentaerythritol, dipentaerythritol or tripentaerythritol.

7. The composition of any one of the preceeding claims, which is a paint based on polybutadien resin, on melamine/formaldehyde and/or radiation-curable varnish.

8. The composition of any one of the preceeding claims, further comprising dispersants, fillers, pigments, defoamers, inorganic salts, flow control additives, crosslinkers and/or silane/siloxane-based silicone microemulsion.

9. The composition of any one of the preceeding claims whereby the composition is added as an addition to carbon-foam-formers.

10. The composition according to any one of the preceeding claims whereby the composition is in liquid form.

11. The composition according to any one of the preceeding claims, wherein at least the ceramic-forming additives and the volume-formers are present in nanoparticle-coated form.

12. The composition according to any one of the preceeding claims, wherein salts of the ceramic-forming additives and of the volume-formers exhibit a particle size of 1 to 50 µm.

13. A method for treating materials for fire protection, comprising applying a composition of any one of claims 1 to 12.

14. The method according to claim 13 wherein the material in question is wood, steel, concrete or plastic.

15. A method of producing a fire protection agent, **characterized in that** ceramic-forming additives and volume-formers are added to a volume-forming fire protection agent.

16. The method according to claim 15, **characterized in that** the ceramic-forming additives are ground with one another before being incorporated by dispersion into the fire protection agent.

17. The method according to any one of claims 15 or 16, **characterized in that** grinding takes place in a ballmill in the absence of moisture for 0 to 3 days.

18. The method according to any one of claims 15 to 17, **characterized in that** the ceramic-forming additives and the volume-formers are present as nanoparticle-coated salts.

19. The use of a composition of any one of claims 1 to 12 as fire protection for wood, steel, concrete, plastic.

20. The use of ceramic-forming additives and volume formers, as defined in any one of the preceding claims, as an admixture to polymers, such as cable-sheetings.

21. The use of ceramic-forming additives and volume-formers for producing transparent coatings, whereby said additives and volume-formers having a particle size of 1 to 150 nm as nanoparticles.

## Revendications

1. Composition pour un agent d'ignifugation de matériaux, **caractérisée en ce qu'**elle comprend en tant qu'ingrédients des additifs de transformation en céramique et des agents d'augmentation de volume.

2. Composition selon la revendication 1, **caractérisée en ce qu'**elle comprend en tant qu'additifs de transformation en céramique au moins deux des composés disodium-tétraborate, ammonium-pentaborate, TiO₂, B₂O₃ et SIO₂, en particulier du disodium-tétraborate et de l'ammonium-pentaborate.

3. Composition selon la revendication 1 ou la revendication 2, **caractérisée en ce qu'**elle comprend en tant qu'agents d'augmentation de volume, de l'agent gazéifiant, le cas échéant en combinaison avec de l'agent acidifiant.

4. Composition selon la revendication 3, l'agent gazéifiant étant choisi dans le groupe se composant de NH₄Cl, NaHCO₃, phosphate de mélamine et mélamine.

5. Composition selon la revendication 3 ou 4, l'agent acidifiant étant choisi dans le groupe se composant de phosphate de mélamine, sulfate d'aluminium, polyphosphate d'ammonium, monophosphate d'ammonium, polyphosphate d'ammonium enrobé de mélamine.

6. Composition selon l'une des revendications précédentes, qui comprend en tant que matière consommable supplémentaire du KAlSO₄, de l'Al(HO)₃, du sulfate d'aluminium, du pentaérythrltol, du dipentaérythritol ou du tripentaérythritol.

7. Composition selon l'une des revendications précédentes, celle-ci étant une peinture à base de résine de polybutadiène, à base de mélamine/ formaldéhyde, et/ou à base de vernis durcissable par rayonnement.

8. Composition selon l'une des revendications précédentes, comprenant en outre de l'agent dispersant, des charges, des pigments, de l'agent anti-mousse, des sels anorganiques, des additifs de contrôle du processus, du réticulant et/ou de la microémulsion de silicone à base de silane/ siloxane.

9. Composition selon l'une des revendications précédentes, la composition étant ajoutée à des agents créateurs de mousse carbonique, en tant qu'additif.

10. Composition selon l'une des revendications précédentes, la composition se présentant sous forme liquide.

11. Composition selon l'une des revendications précédentes, au moins les additifs de transformation en céramique et les agents d'augmentation de volume se présentant sous forme revêtue de nanoparticules.

12. Composition selon l'une des revendications précédentes, des sels des additifs de transformation en céramique et des agents d'augmentation de volume présentant une taille de grain de 1 à 50 µm.

13. Procédé de traitement de matériaux pour l'ignifugation comprenant l'application d'une composition selon l'une des revendications 1 à 12.

14. Procédé selon la revendication 13, dans lequel il s'agit de bois, d'acier, de béton ou de matière synthétique.

15. Procédé de fabrication d'un agent d'ignifugation, **caractérisé en ce que** l'on ajoute à un agent d'ignifugation pouvant former un volume, des additifs de transformation en céramique et des agents d'augmentation de volume.

16. Procédé selon la revendication 15, **caractérisé en ce que** l'on broie les additifs de transformation en céramique les uns avec les autres avant dispersion dans l'agent d'ignifugation.

17. Procédé selon l'une des revendications 15 ou 16, **caractérisé en ce que** le broyage s'effectue en 0 à 3 jours dans un triturateur à boulets sans humidité.

18. Procédé selon l'une des revendications 15 à 17, **caractérisé en ce que** les additifs de transformation en céramique et les agents d'augmentation de volume se présentent en tant que sels revêtus de nanoparticules.

19. Utilisation d'une composition selon l'une des revendications 1 à 12 en tant qu'ignifugeant pour du bois, de l'acier, du béton, de la matière synthétique.

20. Utilisation d'additifs de transformation en céramique et d'agents d'augmentation de volume tels que définis dans l'une des revendications précédentes en tant qu'addition de substance dans des polymères tels que des gaines de câble.

21. Utilisation d'additifs de transformation en céramique et d'agents d'augmentation de volume pour fabriquer des revêtements transparents, ces additifs et agents d'augmentation de volume se présentant en tant que nanoparticules avec une taille de grain de 1 à 150 nm.
